# EUROPEAN PATENT SPECIFICATION

(11) **EP 1 947 138 B1**
(45) Date of publication and mention of the grant of the patent: **26.10.2011**
(21) Application number: 06822688.5
(22) Date of filing: 31.10.2006
(51) Int. Cl.: C08J 9/00, C08J 9/26, H01M 2/16

(54) **POLYOLEFIN MICROPOROUS MEMBRANE, SEPARATOR FOR BATTERY USING THE MEMBRANE, AND BATTERY**
MIKROPORÖSE POLYOLEFINMEMBRAN, SEPARATOR FÜR BATTERIE UNTER VERWENDUNG DER MEMBRAN UND BATTERIE
MEMBRANE MICROPOREUSE POLYOLÉFINE, SÉPARATEUR POUR BATTERIE UTILISANT LA MEMBRANE, ET BATTERIE

(30) Priority: 01.11.2005 JP 2005318791; 01.11.2005 JP 2005318792
(43) Date of publication of application: 23.07.2008
(73) Proprietor: Toray Tonen Specialty Separator Godo Kaisha, Tochigi Prefecture, 329-2763 (JP)
(72) Inventor: KIMISHIMA, Kotaro, Yokohama-shi, Kanagawa 235-0022 (JP); KAIMAI, Norimitsu, Yokohama-shi, Kanagawa 230-0074 (JP)
(74) Representative: Strehl Schübel-Hopf & Partner
(86) International application number: PCT/JP2006/321759
(87) International publication number: WO 2007/052663

(56) References cited:
- EP-A1- 0 794 583
- EP-A1- 1 056 142
- EP-A2- 1 251 576
- JP-A- 2002 128 942
- JP-A- 2002 128 943
- JP-A- 2003 059 480
- JP-A- 2004 196 870

## Description

### FIELD OF THE INVENTION

This invention relates to a microporous polyolefin membrane, a battery separator formed thereby and a battery, particularly to a microporous polyolefin membrane having an excellent balance of shutdown temperature and speed and meltdown properties, a battery separator formed thereby and a battery.

### BACKGROUND OF THE INVENTION

Microporous polyethylene membranes are mainly used for battery separators. Particularly lithium ion battery separators are required to have not only excellent mechanical properties and permeability, but also a property of closing pores in batteries by heat generated by the short-circuiting of external circuits, overcharging, etc. to stop battery reactions (shutdown properties), a property of preventing membranes from breaking when temperatures are elevated after shutdown (meltdown properties), etc.

As a method for improving the properties of a microporous polyethylene membrane, the optimization of starting material compositions, production conditions, etc. has been proposed. For instance, Japanese Patent 2132327 proposes a microporous polyolefin membrane having excellent strength and permeability, which is made of a polyolefin composition comprising 1 % or more by weight of ultra-high-molecular-weight polyolefin having a mass-average molecular weight (Mw) of 7 x 10⁵ or more, and having a molecular weight distribution [mass-average molecular weight/number-average molecular weight (Mw/Mn)] of 10 to 300, the microporous polyolefin membrane having porosity of 35 to 95%, an average pore diameter of 0.001 to 0.2 µm, and a rupture strength of 0.2 kg or more per 15-mm width.

JP 2004-196870 A proposes a microporous polyolefin membrane comprising polyethylene, and polypropylene having a mass-average molecular weight of 5 x 10⁵ or more and a heat of fusion of 90 J/g or more (measured by a differential scanning calorimeter). JP 2004-196871 A proposes a microporous polyolefin membrane comprising polyethylene, and polypropylene having a mass-average molecular weight of 5 x 10⁵ or more and a melting point of 163°C or higher (measured by a differential scanning calorimeter at a temperature-elevating speed of 3 to 20°C/minute). The microporous polyolefin membranes of JP 2004-196870 A and JP 2004-196871 A have shutdown temperatures of 120 to 140°C and meltdown temperatures of 165°C or higher, as well as excellent mechanical properties and permeability.

WO 97/23554 discloses a microporous membrane having high short-circuiting resistance (shutdown properties), which is made of high-density polyethylene or a linear ethylene copolymer having an end vinyl group concentration of 2 or more per 10,000 carbon atoms when measured by infrared spectroscopy, and a fuse temperature (shutdown temperature) of 131 to 136°C.

However, to improve the safety of lithium ion batteries, the microporous membranes are required to have not only low shutdown temperatures and high meltdown temperatures, but also improved air permeability change ratios (an index of shutdown speed) after the start of shutdown.

### OBJECTS OF THE INVENTION

Accordingly, an object of this invention is to provide a microporous polyolefin membrane having a good balance of a high air permeability change ratio (an index of shutdown speed) after the start of shutdown, a low shutdown temperature, and meltdown properties, a battery separator formed thereby, and a battery.

Another object of this invention is to provide a microporous polyolefin membrane having a good balance of a low shutdown start temperature, a high air permeability change ratio after the start of shutdown, a low shutdown temperature, and meltdown properties, a battery separator formed thereby, and a battery.

### DISCLOSURE OF THE INVENTION

As a result of intense research in view of the above objects, the inventors have found that a microporous polyolefin membrane having a good balance of a high air permeability change ratio after the start of shutdown, a low shutdown temperature and meltdown properties can be obtained by using a polyethylene resin having a temperature of 135°C or lower, at which the crystal-melting calorie measured by differential scanning calorimetry at a predetermined temperature-elevating speed reaches 60% of the total crystal-melting calorie, a half-value of a melting endotherm curve (obtained by differential scanning calorimetry) of 10°C or lower, and an angular frequency of 10 rad/sec or less, at which the storage modulus and the loss modulus obtained by melt viscoelasticity measurement are equal to each other at a predetermined temperature. The inventors also have found that a microporous polyolefin membrane having a good balance of a low shutdown start temperature, a high air permeability change ratio after the start of shutdown, a low shutdown temperature and meltdown properties can be obtained by using a polyethylene resin having a temperature of 125°C or lower, at which the above crystal-melting calorie reaches 20% of the total crystal-melting calorie, a temperature of 135°C or lower, at which the above crystal-melting calorie reaches 60% of the total crystal-melting calorie, and an angular frequency of 1 rad/sec or less, at which the storage modulus and the loss modulus are equal to each other. This invention has been completed based on such findings.

Thus, the first microporous polyolefin membrane of this invention is made of a polyethylene resin as a main component, and has (a) a shutdown temperature of 135°C or lower, at which the air permeability measured while heating at a temperature-elevating speed of 5°C/minute reaches 1 x 10⁵ sec/100 cm³, (b) an air permeability change ratio of 1 x 10⁴ sec/100 cm³/°C or more, which is a gradient of a curve representing the dependency of air permeability on a temperature at the air permeability of 1 x 10⁴ sec/100 cm³, and (c) a meltdown temperature of 150°C or higher, at which the air permeability measured while further heating after reaching the shutdown temperature becomes 1 x 10⁵ sec/100 cm³ again.

In the first microporous polyolefin membrane, the polyethylene resin preferably has a temperature of 135°C or lower, at which the crystal-melting calorie measured by differential scanning calorimetry at a constant temperature-elevating speed in a range of 3 to 20°C/minute reaches 60% of the total crystal-melting calorie; a half-value of a melting endotherm curve (obtained by differential scanning calorimetry) of 10°C or lower, and an angular frequency of 10°C or lower, and an angular frequency of 10 rad/sec or less, at which the storage modulus and the loss modulus obtained by melt viscoelasticity measurement at a constant temperature in a range of 160 to 220°C are equal to each other.

The second microporous polyolefin membrane of this invention is made of a polyethylene resin as a main component, and has (a) a shutdown temperature of 135°C or lower, at which the air permeability measured while heating at a temperature-elevating speed of5°C/minute reaches 1 x 10⁵ sec/100 cm ³ (b) an air permeability change ratio of 1 x 10⁴ sec/100 cm³/°C or more, which is a gradient of a curve representing the dependency of air permeability on a temperature at the air permeability of 1 x 10⁴ sec/100 cm³, (c) a shutdown start temperature of 130°C or lower, which is determined from a curve representing the dependency of a reciprocal of the air permeability on a temperature, at an intersection of an extension of a straight portion of the curve after the start of temperature elevation and before the start of shutdown and an extension of a straight portion of the curve after the start of shutdown and before reaching the shutdown temperature, and (d) a meltdown temperature of 155°C or higher, at which the air permeability measured while further heating after reaching the shutdown temperature becomes 1 x 10⁵ sec/100 cm³ again.

In the second microporous polyolefin membrane, (e) the air permeability (converted to the value at 20-µm thickness) is 800 sec/100 cm³ or less, (f) the pin puncture strength (converted to the value at 20-µm thickness) is 4,000 mN or more, and (g) the heat shrinkage ratio measured after exposed to. 105°C for 8 hours is 8% or less.

The third microporous polyolefin membrane is according to claim 3.

The battery separator of this invention is formed by the first or second microporous polyolefin membrane.

The battery of this invention comprises a battery separator formed by the first or second microporous polyolefin membrane.

### BRIEF DESCRIPTION OF THE DRAWING

Fig. 1 is a graph showing a typical example of melting endotherm curves.

Fig. 2 is a graph showing a temperature T (60%), at which a crystal-melting calorie reaches 60% of the total crystal-melting calorie in the same melting endotherm curve as in Fig. 1.

Fig. 3 is a graph showing a half-value ΔTₘ of the same melting endotherm curve as in Fig. 1.

Fig. 4 is a graph exemplifying a log ω-log G' curve and a log ω-log G" curve for determining ω₀.

Fig. 5 is a graph showing a temperature T (20%), at which a crystal-melting calorie reaches 20% of the total crystal-melting calorie in the same melting endotherm curve as in Fig. 1.

Fig. 6 is a graph showing a typical example of curves of air permeability p to temperature T for determining a shutdown temperature, an air permeability change ratio and a meltdown temperature.

Fig. 7 is a graph showing a typical example of temperature T-(air permeability p)-¹ curves for determining a shutdown start temperature.

### DESCRIPTION OF THE PREFERRED EMBODIMENTS

[1] First polyolefin resin

The first polyolefin resin forming the first microporous polyolefin membrane comprises the first polyethylene resin described below as a main component.

(1) Crystal-melting calorie and dynamic melt viscoelasticity of first polyethylene resin

The first polyethylene resin has a temperature [hereinafter referred to as "T (60%)"] of 135°C or lower, at which a crystal-melting calorie ΔHₘ measured by differential scanning calorimetry (DSC) at a constant temperature-elevating speed in a range of 3 to 20°C/minute reaches 60% of the total crystal-melting calorie, a half-value ΔTₘ of a melting endotherm curve (obtained by DSC) of 10°C or lower, and an angular frequency ω₀ of 10 rad/sec or less, at which the storage modulus (G') and the loss modulus (G") obtained by melt viscoelasticity measurement at a constant temperature in a range of 160 to 220°C are equal to each other.

T (60%) is a parameter affected by the primary structure of polyethylene (homopolymer or ethylene-α-olefin copolymer), such as a molecular weight, a molecular weight distribution, a branching ratio, the molecular weight of branched chains, the distribution of branching points, the fractions of the copolymer, etc., and the high-order structure of polyethylene such as the size and distribution of crystals, crystal lattice regularity, etc., acting as an index of the shutdown temperature of the microporous polyolefin membrane. When T (60%) is higher than 135°C, the microporous polyolefin membrane exhibits a high shutdown temperature when used as a lithium battery separator.

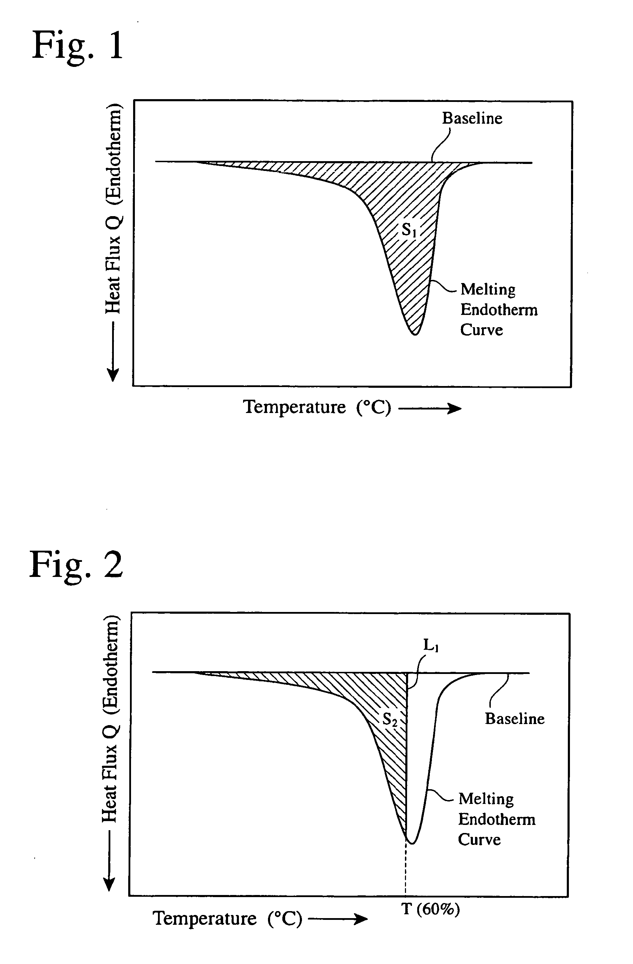

The crystal-melting calorie ΔHₘ of the first polyethylene resin was measured by the following procedure according to JIS K7122. Namely, a sample of the first polyethylene resin (0.5-mm- thick molding melt-pressed at 210°C) was placed in a sample holder of a differential scanning calorimeter (Pyris Diamond DSC available from Perkin Elmer, Inc.), heat-treated at 230°C for 1 minute in a nitrogen atmosphere, cooled to 30°C at 10°C/minute, kept at 30°C for 1 minute, and heated to 230°C at a speed of 3 to 20°C/minute. The temperature-elevating speed is preferably 5 to 15°C/minute, more preferably 10°C/minute. As shown in Fig. 1, the calorie was calculated from an area S₁ of a region (shown by hatching) enclosed by a DSC curve (melting endotherm curve) obtained in the course of temperature elevation and a baseline. The crystal-melting calorie ΔHₘ (unit: J/g) was obtained by dividing the calorie (unit: J) by the weight (unit: g) of the sample. T (60%) is a temperature, at which an area S₂ of a lower-temperature region (shown by hatching) obtained by dividing the above region by a straight line L₁ perpendicular to the temperature axis reaches 60% of the area S₁, as shown in Fig. 2.

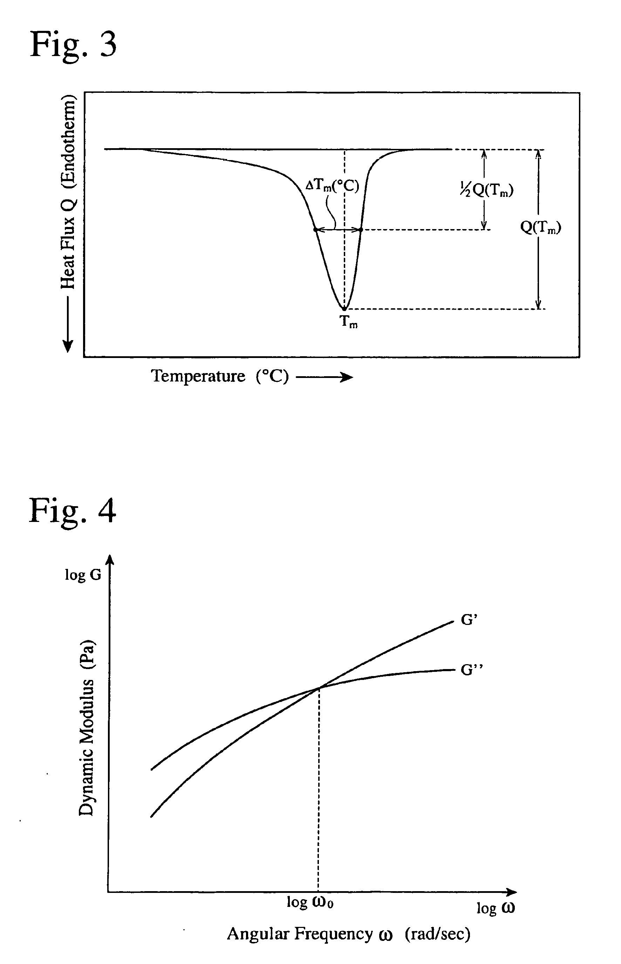

ΔTₘ is a parameter affected by the size and distribution of crystals, crystal lattice regularity, etc. of the polyethylene, acting as an index of the shutdown speed. The larger ΔTₘ provides a longer time period from start to end of melting, resulting in a lower air permeability change ratio, an index of the shutdown speed, and slower overheat shutdown response when the microporous polyolefin membrane is used as a lithium battery separator. The ΔTₘ of 10°C or lower provides a good shutdown speed. The ΔTₘ is preferably 9°C or lower. The ΔTₘ (°C) is a temperature difference between two points on the melting endotherm curve, at which a heat flux Q (Tₘ) is 1/2 of the heat flux at a peak Tₘ, as shown in Fig. 3.

ω₀ is a parameter affected by the characteristics of the polyethylene, such as a mass-average molecular weight (Mw), a molecular weight distribution and a branching ratio, and the molecular weight of branched chains, the distribution of branching points, the degree of entanglement of molecules, and a molecular weight between the entangling points of molecules, an index of the meltdown temperature. The ω₀ of more than 10 rad/sec provides a lithium battery separator formed by the microporous polyolefin membrane with a low meltdown temperature, and poor rupture resistance during temperature elevation after shutdown, resulting in a low-stability battery. The ω₀ is preferably 3 rad/sec or less. The lower limit of the ω₀ is preferably 0.01 rad/sec. The ω₀ of less than 0.01 rad/sec provides a high viscosity, and thus low extrudability. The ω₀ of 0.01 to 1 rad/sec is particularly preferable.

The ω₀ was measured under the following conditions using a commercially available melt viscoelasticity meter (RheoStress-300 available from Haake).
Measurement temperature: constant in a range of 160 to 220°C,
Fixing jig: parallel plate (diameter: 8mm),
Gap (sample thickness): 0.3 mm,
Angular frequency range measured: 0.01 to 100 rad/s,
Strain (γ): 0.5%, and
Sample: a molding (thickness: 0.5 mm, diameter: 8 mm) obtained by melt pressing at a temperature of 210°C, which was stabilized at the above measurement temperature and then compressed to a thickness of 0.3 mm.

The response of G' and G" to an angular frequency ω was measured under the above conditions to depict a log ω-log G' curve and a log ω-log G" curve as shown in Fig. 4. An angular frequency at the intersection of these curves was regarded as ω₀.

(2) Composition of first polyethylene resin

The first polyethylene resin may be a single substance or a composition of two or more types of polyethylene, as long as its T (60%), ΔTₘ and ω₀ are in the above ranges. The first polyethylene resin is preferably (a) ultra-high-molecular-weight polyethylene, (b) polyethylene other than the ultra-high-molecular-weight polyethylene, or (c) a mixture of the ultra-high-molecular-weight polyethylene and the other polyethylene (polyethylene composition). In any case, the mass-average molecular weight (Mw) of the first polyethylene resin is preferably 1 x 10⁴ to 1 x 10⁷, more preferably 5 x 10⁴ to 15 x 10⁶, particularly 1 x 10⁵ to 5 x 10⁶, though not particularly critical.

(a) Ultra-high-molecular-weight polyethylene

The ultra-high-molecular-weight polyethylene has Mw of 7 x 10⁵ or more. The ultra-high-molecular-weight polyethylene can be not only an ethylene homopolymer, but also an ethylene-α-olefin copolymer containing a small amount of another α-olefin. The other α-olefins than ethylene are preferably propylene, butene-1, pentene-1, hexene-1, 4-methylpentene-1, octene-1, vinyl acetate, methyl methacrylate and styrene. The Mw of the ultra-high-molecular-weight polyethylene is preferably 1 x 10⁶ to 15 x 10⁶, more preferably 1 x 10⁶ to 5 x 10⁶.

(b) Polyethylene other than ultra-high-molecular-weight polyethylene

The polyethylene other than the ultra-high-molecular-weight polyethylene has Mw of 1 x 10⁴ or more and less than 7 x 10⁵, being preferably high-density polyethylene, medium-density polyethylene, branched low-density polyethylene and linear low-density polyethylene, more preferably high-density polyethylene. The polyethylene having Mw of 1 x 10⁴ or more and less than 7 x 10⁵ can be not only an ethylene homopolymer, but also a copolymer containing a small amount of another a-olefin such as propylene, butene-1, hexene-1, etc. Such copolymers are preferably produced using single-site catalysts. The polyethylene other than the ultra-high-molecular-weight polyethylene can be not only a single substance, but also a mixture of two or more polyethylenes other than the ultra-high-molecular-weight polyethylene.

(c) Polyethylene composition

The polyolefin composition is a mixture of the ultra-high-molecular-weight polyethylene having Mw of 7 x 10⁵ or more with the other polyethylene having Mw of 1 x 10⁴ or more and less than 7 x 10⁵ (at least one selected from the group consisting of high-density polyethylene, medium-density polyethylene, branched low-density polyethylene, and linear low-density polyethylene). The ultra-high-molecular-weight polyethylene and the other polyethylene can be the same as described above. The molecular weight distribution [mass-average molecular weight/number-average molecular weight (Mw/Mn)] of this polyethylene composition can easily be controlled depending on applications. The preferred polyethylene composition comprises the above ultra-high-molecular-weight polyethylene and high-density polyethylene. The high-density polyethylene used in the polyethylene composition has Mw of preferably 1 x 10⁵ to 7 x 10⁵, more preferably 1 x 10⁵ to 5 x 10⁵, most preferably 2.6 x 10⁵ to 4 x 10⁵. The amount of the ultra-high-molecular-weight polyethylene in the polyethylene composition is preferably 1% by mass or more, more preferably 2 to 50% by mass, based on 100% by mass of the entire polyethylene composition.

(d) Molecular weight distribution Mw/Mn

Mw/Mn is a measure of the molecular weight distribution, and the larger this value is, the wider the molecular weight distribution is. The Mw/Mn of the first polyethylene resin is preferably 5 to 300, more preferably 10 to 100, though not critical, when the polyethylene resin is the ultra-high-molecular-weight polyethylene, the polyethylene other than the ultra-high-molecular-weight polyethylene, or the polyethylene composition. When the Mw/Mn is less than 5, there are excessive high-molecular weight components, resulting in difficulty in melt extrusion. When the Mw/Mn is more than 300, there are excessive low-molecular weight components, resulting in a microporous membrane with decreased strength. The Mw/Mn of polyethylene (homopolymer or ethylene-α-olefin copolymer) can properly be controlled by multi-stage polymerization. The multi-stage polymerization method is preferably a two-stage polymerization method comprising forming a high-molecular-weight polymer component in the first stage and forming a low-molecular-weight polymer component in the second stage. In the case of the polyethylene composition, the larger the Mw/Mn, the larger difference in Mw between the ultra-high-molecular-weight polyethylene and the other polyethylene, and vice versa. The Mw/Mn of the polyethylene composition can be properly controlled by the molecular weight and percentage of each component.

Such first polyethylene resins are commercially available, for instance, as Nipolon Hard 6100A, 7300A and 5110A, 6510A, 6530A and 6200A from Tosoh Corporation, and HI-ZEX 640UF and 780UF from Prime Polymer Co., Ltd.

(3) Addable resins

The first polyolefin resin may contain a polyolefin other than polyethylene or a resin other than the polyolefin in a range not deteriorating the effect of this invention. Accordingly, it should be noted that the term "polyolefin resin" includes not only a polyolefin but also a resin other than the polyolefin. The polyolefin other than polyethylene can be at least one selected from the group consisting of polypropylene, polybutene-1, polypentene-1, polyhexene-1, poly-4-methylpentene-1, polyoctene-1, polyvinyl acetate, polymethyl methacrylate, polystyrene and ethylene-α-olefin copolymers each having Mw of 1 x 10⁴ to 4 x 10⁶, and a polyethylene wax having Mw of 1 x 10³ to 1 x 10⁴. Polypropylene, polybutene-1, polypentene-1, polyhexene-1, poly-4-methylpentene-1, polyoctene-1, polyvinyl acetate, polymethyl methacrylate and polystyrene may be homopolymers or copolymers containing other α-olefins.

The resin other than the polyolefin includes a heat-resistant resin having a melting point or glass transition temperature (Tg) of 150°C or higher. The heat-resistant resin is preferably a crystalline resin (including partially crystalline resin) having a melting point of 150°C or higher, or an amorphous resin having Tg of 150°C or higher. The melting point and Tg can be measured according to JIS K7121.

Because a battery separator formed by a microporous polyolefin membrane comprising the first polyethylene resin containing the heat-resistant resin has an improved meltdown temperature, batteries are provided with improved high-temperature storage stability. Though not particularly critical, the upper limit of the melting point or Tg of the heat-resistant resin is preferably 350°C or lower from the aspect of easy blending with the first polyethylene resin. The melting point or Tg of the heat-resistant resin is more preferably 170 to 260°C.

Specific examples of the heat-resistant resin include polyesters such as polybutylene terephthalate (melting point: about 160 to 230°C) and polyethylene terephthalate (melting point: about 250 to 270°C), fluororesins, polyamides (melting point: 215 to 265°C), polyarylene sulfides, isotactic polystyrene (melting point: 230°C), polyimides (Tg: 280°C or higher), polyamideimides (Tg: 280°C), polyethersulfone (Tg: 223°C), polyetheretherketone (melting point: 334°C), polycarbonates (melting point: 220 to 240°C), cellulose acetate (melting point: 220°C), cellulose triacetate (melting point: 300°C), polysulfone (Tg: 190°C), polyetherimides (melting point: 216°C), etc. The heat-resistant resin can be composed of a single resin component or pluralities of resin components.

The heat-resistant resin content is preferably 3 to 30% by mass, more preferably 5 to 25% by mass, based on 100% by mass of the total amount of the first polyethylene resin and the heat-resistant resin. When this content is more than 30% by mass, the membrane has low pin puncture strength, tensile rupture strength and flatness.

[2] Second polyolefin resin

The second polyolefin resin forming the second microporous polyolefin membrane comprises the second polyethylene resin described below as a main component.

(1) Crystal-melting calorie and dynamic melt viscoelasticity of second polyethylene resin

The second polyethylene resin has a temperature [hereinafter referred to as "T (20%)"] of 125°C or lower, at which a crystal-melting calorie ΔHₘ measured by differential scanning calorimetry (DSC) at a constant temperature-elevating speed in a range of 3 to 20°C/minute reaches 20% of the total crystal-melting calorie, T (60%) of 135°C or lower, and ω₀ of 1 rad/sec or less.

T (20%) is also a parameter affected by the primary structure of polyethylene (homopolymer or ethylene-α-olefin copolymer) such as a molecular weight, a molecular weight distribution, a branching ratio, the molecular weight of branched chains, the distribution of branching points, the percentage of copolymers, etc., and the high-order structure of the polyethylene such as the size and distribution of crystals, crystal lattice regularity, etc. In the second polyethylene resin, T (20%) and T (60%) are indexes of the shutdown start temperature and the shutdown temperature. When T (20%) is higher than 125°C, or when T (60%) is higher than 135°C, a lithium battery separator formed by the microporous polyolefin membrane has high shutdown start temperature or shutdown temperature, and low shutdown response when overheated.

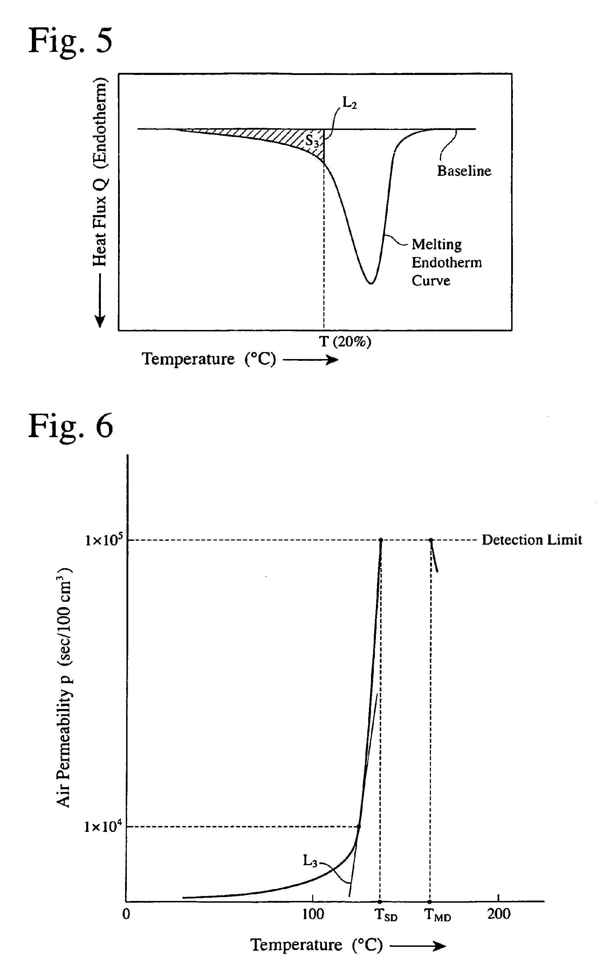

As described above, an area S₁ of a region enclosed by a DSC curve (melting endotherm curve) obtained in the course of temperature elevation according to JIS K7122 and the baseline was determined (see Fig. 1), and the crystal-melting calorie, ΔHₘ (unit: J/g) of the second polyethylene resin was obtained by dividing a calorie (unit: J) calculated from the area S₁ by the weight (unit: g) of the sample. As shown in Fig. 5, T (20%) is a temperature, at which an area S₃ of a lower-temperature region (shown by hatching) obtained by dividing the above region by a straight line L₂ perpendicular to the temperature axis reaches 20% of the area S₁. T (60%) was determined by the same method as described above.

Like above, ω₀ is an index of the meltdown temperature. The ω₀ of 1 rad/sec or less provides excellent meltdown properties. In the second polyethylene resin, the ω₀ is preferably 0.8 rad/sec or less, more preferably 0.1 1 rad/sec or less. The lower limit of the ω₀ is preferably 0.01 rad/sec. The ω₀ was determined by the same method as described above.

(2) Composition of second polyethylene resin

The second polyethylene resin may be a single substance or a composition of two or more types of polyethylene, as long as its T (20%), T (60%) and ω₀ are within the above ranges. The second polyethylene resin is also preferably (a) ultra-high-molecular-weight polyethylene, (b) polyethylene other than the ultra-high-molecular-weight polyethylene, or (c) a mixture of the ultra-high-molecular-weight polyethylene and the other polyethylene (polyethylene composition). The ultra-high-molecular-weight polyethylene, the polyethylene other than the ultra-high-molecular-weight polyethylene, and the polyethylene composition may be the same as above.

Such second polyethylene resins are commercially available, for instance, as GUR from Ticona Japan Ltd., Novatec HF311 from Japan Polyethylene Co., Ltd., Nipolon Hard 6100A, 7300A and 5100A from Tosoh Corporation, HI-ZEX 640UF and 780UF from Prime Polymer Co., Ltd.

The second polyolefin resin may also contain a polyolefin other than the polyethylene and the above heat-resistant resin in a range not deteriorating the effect of this invention. These percentages may also be the same as above.

[3] Inorganic fillers

Inorganic fillers may be added to the first or second polyolefin resin. The inorganic fillers include silica, alumina, silica-alumina, zeolite, mica, clay, kaolin, talc, calcium carbonate, calcium oxide, calcium sulfate, barium carbonate, barium sulfate, magnesium carbonate, magnesium sulfate, magnesium oxide, diatomaceous earth, glass powder, aluminum hydroxide, titanium dioxide, zinc oxide, satin white, acid clay, etc. The inorganic fillers can be used alone or in combination. Among them, silica or calcium carbonate is preferably used. The amount of inorganic fillers added is preferably 0.1 to 5 parts by mass, more preferably 0.5 to 3 parts by mass, based on 100 parts by mass of the total amount of the polyolefin resin and the fillers.

[4] Production method of first microporous polyolefin membrane.

The production method of the first microporous polyolefin membrane comprises the steps of (1) melt-blending the first polyolefin resin and a membrane-forming solvent to prepare a polyolefin resin solution, (2) extruding the polyolefin resin solution through a die, (3) cooling the resultant extrudate to form a gel-like sheet, (4) removing the membrane-forming solvent, and (5) drying the membrane. Namely, the first microporous polyolefin membrane is produced by a so-called wet method. Before the step (4), if necessary, a stretching step (6), a heat roll treatment step (7), a hot solvent treatment step (8) and a heat-setting step (9) can be conducted. After the step (5), a step (10) of stretching a microporous membrane, a heat treatment step (11), a cross-linking step (12) with ionizing radiations, a hydrophilizing step (13), a surface-coating step (14), etc. can be conducted. Incidentally, a dry method in which pores are formed by stretching may be advantageous than the wet method in a shutdown temperature, a shutdown speed, etc.

(1) Preparation of polyolefin resin solution

The first polyolefin resin and a proper membrane-forming solvent are melt-blended to prepare a polyolefin resin solution. The polyolefin resin solution can contain various additives such as the above fillers, antioxidants, ultraviolet absorbents, antiblocking agents, pigments, dyes, etc., if necessary, in ranges not deteriorating the effects of this invention. Fine silicate powder, for instance, can be added as a pore-forming agent.

The membrane-forming solvent can be liquid or solid. The liquid solvents can be aliphatic or cyclic hydrocarbons such as nonane, decane, decalin, p-xylene, undecane, dodecane, liquid paraffin, etc.; and mineral oil distillates having boiling points corresponding to those of the above hydrocarbons. To obtain a gel-like sheet having a stable liquid solvent content, non-volatile liquid solvents such as liquid paraffin are preferable. The solid solvent preferably has melting point of 80°C or lower. Such solid solvents are paraffin wax, ceryl alcohol, stearyl alcohol, dicyclohexyl phthalate, etc. The liquid solvent and the solid solvent can be used in combination.

The viscosity of the liquid solvent is preferably 30 to 500 cSt, more preferably 30 to 200 cSt, at 25°C. When the viscosity at 25°C is less than 30 cSt, the solution is easily foamed, resulting in difficulty in blending. The viscosity of more than 500 cSt makes the removal of the liquid solvent difficult.

Though not particularly critical, the uniform melt blending of the polyolefin resin solution is preferably conducted in a double-screw extruder. Melt blending in the double-screw extruder is suitable for preparing a high-concentration polyolefin resin solution. The melt-blending temperature of the polyolefin resin solution is preferably in a range from the melting point Tm₁ of the first polyolefin resin + 10°C to the melting point Tm₁ + 100°C. The melting point Tm₁ of the first polyolefin resin is the melting point of (a) the ultra-high-molecular-weight polyethylene, (b) the polyethylene other than the ultra-high-molecular-weight polyethylene, or (c) the polyethylene composition, when the first polyolefin resin is any one of them. When the first polyolefin resin is the composition containing the polyolefin other than the polyethylene or the heat-resistant resin, the melting point Tm₁ of the first polyolefin resin is the melting point of ultra-high-molecular-weight polyethylene, the other polyethylene, or the polyethylene composition, which is contained in the above composition. The ultra-high-molecular-weight polyethylene, the polyethylene other than the ultra-high-molecular-weight polyethylene and the polyethylene composition have melting points of about 130 to 140°C. Accordingly, the melt-blending temperature is preferably 140 to 250°C, more preferably 170 to 240°C.

When the first polyolefin resin contains the heat-resistant resin, the melt-blending temperature is preferably in a range from the melting point of the heat-resistant resin to the melting point + 100°C, more preferably in a range from the melting point of the heat-resistant resin to the melting point Tm₁ + 100°C. The membrane-forming solvent may be added before the start of blending or introduced into the double-screw extruder at an intermediate point during blending, through the latter is preferable. In the melt blending, the antioxidant is preferably added to prevent the oxidation of the first polyolefin resin.

The concentration of the first polyolefin resin is 10 to 50% by mass, preferably 20 to 45% by mass, based on 100% by mass of the total amount of the first polyolefin resin and the membrane-forming solvent. Less than 10% by mass of the first polyolefin resin undesirably lowers productivity. In addition, large swelling and neck-in occur at the die exit in the extrusion of the polyolefin resin solution, resulting in decrease in the formability and self-supportability of the extrudate. More than 50% by mass of the first polyolefin resin lowers the formability of the extrudate.

(2) Extrusion

The melt-blended polyolefin resin solution is extruded through a die directly or indirectly from the extruder. Alternatively, it may be cooled to pellets, introduced into the extruder again, and then extruded through the die. Although a sheet-forming die having a rectangular orifice is usually used, a double-cylindrical, hollow die, an inflation die lip, etc. can also be used. The sheet-forming die usually has a die gap of 0.1 to 5 mm, and is heated at 140 to 250°C during extrusion. The extrusion speed of the heated solution is preferably 0.2 to 15 m/minute.

(3) Formation of gel-like sheet

An extrudate exiting from the die is cooled to provide a gel-like sheet. The cooling is preferably conducted to at least a gelation temperature at a speed of 50°C/minute or more. Such cooling fixes microphase separation between the first polyolefin resin and the membrane-forming solvent, thereby providing a fixed gel structure comprising a first polyolefin resin phase and a membrane-forming solvent phase. The cooling is preferably conducted to 25°C or lower. In general, a low cooling speed provides the gel-like sheet with a coarse high-order structure having large pseudo-cell units, while a high cooling speed provides dense cell units. The cooling speed of less than 50°C/minute increases crystallization, making it difficult to form a stretchable gel-like sheet. The cooling method can be a method of bringing the extrudate into contact with a cooling medium such as cooling air, cooling water, etc., a method of bring the extrudate into contact with a cooling roll, etc., and the cooling method using a cooling roll is preferable.

The temperature of the cooling roll is preferably (the crystallization temperature Tc₁ of the first polyolefin resin - 115°C) to Tc₁, more preferably (Tc₁ - 110°C) to (Tc₁ - 10°C). When the temperature of the cooling roll is higher than Tc₁, sufficiently rapid cooling cannot be conducted. The crystallization temperature Tc₁ of the first polyolefin resin is the crystallization temperature of (a) the ultra-high-molecular-weight polyethylene, (b) the polyethylene other than the ultra-high-molecular-weight polyethylene, or (c) the polyethylene composition, when the first polyolefin resin is any one of them. When the first polyolefin resin is a composition containing the polyolefin other than the polyethylene or the heat-resistant resin, it is the crystallization temperature of the ultra-high-molecular-weight polyethylene, the other polyethylene or the polyethylene composition, which is contained in the above composition. The crystallization temperature is measured according to JIS K7121. The ultra-high-molecular-weight polyethylene, the other polyethylene and the polyethylene composition generally have crystallization temperatures of 102 to 108°C. Accordingly, the temperature of the cooling roll is in a range from -10°C to 105°C, preferably in a range from -5°C to 95°C. The contact time of the cooling roll with the sheet is preferably 1 to 30 seconds, more preferably 2 to 15 seconds.

(4) Removal of membrane-forming solvent

The liquid solvent is removed (washed away) using a washing solvent. Because the first polyolefin resin phase is separated from the membrane-forming solvent phase in the gel-like sheet, the removal of the liquid solvent provides a microporous membrane. The removal (washing away) of the liquid solvent can be conducted by using a known washing solvent. The washing solvents can be volatile solvents, for instance, saturated hydrocarbons such as pentane, hexane, heptane, etc.; chlorinated hydrocarbons such as methylene chloride, carbon tetrachloride, etc.; ethers such as diethyl ether, dioxane, etc.; ketones such as methyl ethyl ketone, etc.; linear fluorocarbons such as trifluoroethane, C₆F₁₄, C₇F₁₆, etc.; cyclic hydrofluorocarbons such as C₅H₃F₇, etc.; hydrofluoroethers such as C₄F₉0CH₃, C₄F₉OC₂H₅, etc.; and perfluoroethers such as C₄F₉OCF₃, C₄F₉OC₂F₅, etc. These washing solvents have a low surface tension, for instance, 24 mN/m or less at 25°C. The use of a washing solvent having a low surface tension suppresses a pore-forming network structure from shrinking due to a surface tension of gas-liquid interfaces during drying after washing, thereby providing a microporous membrane having high porosity and permeability.

The washing of the membrane can be conducted by a washing-solvent-immersing method, a washing-solvent-showering method, or a combination thereof. The amount of the washing solvent used is preferably 300 to 30,000 parts by mass, per 100 parts by mass of the membrane before washing. Washing with the washing solvent is preferably conducted until the amount of the remaining liquid solvent becomes less than 1% by mass of that added.

(5) Drying of membrane

The microporous polyolefin membrane obtained by removing the membrane-forming solvent is then dried by a heat-drying method, a wind-drying method, etc. The drying temperature is preferably equal to or lower than the crystal dispersion temperature Tcd₁ of the first polyolefin resin, particularly lower than the Tcd₁ by 5°C or more.

The crystal dispersion temperature Tcd₁ of the first polyolefin resin is the crystal dispersion temperature of (a) the ultra-high-molecular-weight polyethylene, (b) the polyethylene other than the ultra-high-molecular-weight polyethylene, or (c) the polyethylene composition, when the first polyolefin resin is any one of them. When the first polyolefin resin is a composition containing the polyolefin other than polyethylene or the heat-resistant resin, it is the crystal dispersion temperature of the ultra-high-molecular-weight polyethylene, the other polyethylene or the polyethylene composition, which is contained in the above composition. The crystal dispersion temperature is determined by the measurement of the temperature characteristics of dynamic viscoelasticity according to ASTM D 4065. The ultra-high-molecular-weight polyethylene, the polyethylene other than the ultra-high-molecular-weight polyethylene and the polyethylene composition have crystal dispersion temperatures of about 90 to 100°C.

Drying is conducted until the percentage of the remaining washing solvent becomes preferably 5% or less by mass, more preferably 3% or less by mass, based on 100% by mass of the microporous membrane (dry weight). Insufficient drying undesirably reduces the porosity of the microporous membrane when heat-treated subsequently, thereby resulting in poor permeability.

(6) Stretching

The gel-like sheet before washing is preferably stretched at least monoaxially. After heating, the gel-like sheet is preferably stretched to a predetermined magnification by a tenter method, a roll method, an inflation method, a rolling method, or their combination. Because the gel-like sheet contains a membrane-forming solvent, it can be uniformly stretched. The stretching is particularly preferable when used for battery separators, because it improves the mechanical strength and expands pores. Although the stretching can be monoaxial or biaxial, biaxial stretching is preferable. The biaxial stretching can be simultaneous biaxial stretching, sequential stretching, or multi-stage stretching (for instance, a combination of simultaneous biaxial stretching and sequential stretching), though the simultaneous biaxial stretching is particularly preferable.

The stretching magnification is preferably 2-fold or more, more preferably 3- to 30-fold in the case of monoaxial stretching. In the case of biaxial stretching, it is at least 3-fold in both directions, preferably with an area magnification of 9-fold or more. The area magnification of less than 9-fold results in insufficient stretching, failing to providing a high-modulus, high-strength microporous membrane. When the area magnification is more than 400-fold, restrictions occur on stretching apparatuses, stretching operations, etc. The upper limit of the area magnification is preferably 50-fold.

The stretching temperature is preferably equal to or lower than the melting point Tm₁ of the first polyolefin resin + 10°C, more preferably in a range of the crystal dispersion temperature Tcd₁ or higher and lower than the melting point Tm₁ + 10°C. When this stretching temperature exceeds the melting point Tm + 10°C, the first polyethylene resin is molten, so that stretching fails to orient molecular chains. When it is lower than the crystal dispersion temperature Tcd₁ the first polyethylene resin is insufficiently softened, making it likely that the membrane is broken by stretching, thus failing to achieve high-magnification stretching. As described above, the first polyethylene resin has a crystal dispersion temperature of about 90 to 100°C. Accordingly, the stretching temperature is usually in a range of 90 to 140°C, preferably in a range of 100 to 130°C.

The above stretching causes cleavage between polyethylene crystal lamellas, making the polyethylene phase (the ultra-high-molecular-weight polyethylene, the other polyethylene or the polyethylene Composition) finer with larger numbers of fibrils. The fibrils form a three-dimensional network structure (three-dimensionally and irregularly connected network structure).

Depending on the desired properties, stretching can be conducted with a temperature distribution in a thickness direction, to provide a microporous membrane with higher mechanical strength. This method is described specifically in Japanese Patent 3347854.

(7) Hot roll treatment

At least one surface of the gel-like sheet can be brought into contact with a heat roll. This method is specifically described, for instance, in JP 2007-106992 A.

(8) Hot solvent treatment

The gel-like sheet can be treated with a hot solvent. This method is specifically described in WO 2000/20493.

(9) Heat setting

The stretched gel-like sheet is preferably heat-set. This method is specifically described, for instance, in JP 2002-256099 A.

(10) Stretching of microporous membrane

The dried microporous polyolefin membrane can be stretched at least monoaxially in a range not deteriorating the effect of this invention. This stretching can be conducted by a tenter method, etc. while heating the membrane, in the same manner as described above.

The temperature of stretching the microporous membrane is preferably equal to or lower than the melting point Tm₁ of the first polyolefin resin, more preferably in a range from the crystal dispersion temperature Tcd₁ to the melting point Tm₁. Specifically, it is in a range of 90 to 135°C, preferably in a range of 95 to 130°C. In the case of biaxial stretching, it is preferably 1.1-to 2.5-fold, more preferably 1.1- to 2.0-fold, at least monoaxially. When this magnification is more than 2.5-fold, the shutdown temperature may be affected

(11)-Heat treatment

The dried membrane is preferably heat-set and/or annealed by known methods. They may be properly selected depending on properties required on the microporous polyolefin .membrane.

(12) Cross-linking of membrane

The dried microporous polyolefin membrane can be cross-linked by ionizing radiation of α-rays, β-rays, γ-rays, electron beams, etc. The electron beam irradiation is preferably conducted at 0.1 to 100 Mrad and accelerating voltage of 100 to 300 kV The cross-linking treatment elevates the meltdown temperature of the microporous membrane.

(13) Hydrophilizing

The dried microporous polyolefin membrane can be hydrophilized by a monomer-grafting treatment, a surfactant treatment, a corona-discharging treatment, a plasma treatment, etc., which are known.

(14) Surface coating

The dried microporous polyolefin membrane can be coated with a porous fluororesin such as polyvinylidene fluoride and polytetrafluoroethylene, porous polyimide, porous polyphenylene sulfide, etc., to improve meltdown properties when used as a battery separator. A coating layer comprising polypropylene may be formed on at least one surface of the dried microporous polyolefin membrane. The containing polypropylene is described, for instance, in W02005-054350.

[5] Production method of second microporous polyolefin membrane

The production method of the second microporous polyolefin membrane may be the same as the production method of the first microporous polyolefin membrane except for using the second polyolefin resin in place of the first polyolefin resin. While the melt-blending temperature, the cooling temperature of an extrudate, the drying temperature, the stretching temperature of a gel-like sheet and the stretching temperature of a microporous membrane are determined depending on the crystallization temperature Tc₁, crystal dispersion temperature Tcd₁ or melting point Tm₁ of the first polyolefin resin in the production method of the first microporous polyolefin membrane, these temperatures are determined depending on the crystallization temperature Tc₂, crystal dispersion temperature Tcd₂ or melting point Tm₂ of the second polyolefin resin in the production method of the second microporous polyolefin membrane.

The crystallization temperature Tc₂ of the second polyolefin resin is the crystallization temperature of (a) the ultra-high-molecular-weight polyethylene, (b) the polyethylene other than the ultra-high-molecular-weight polyethylene, or (c) the polyethylene composition, when the second polyolefin resin is any one of them. When the second polyolefin resin is a composition comprising the polyolefin other than polyethylene or the heat-resistant resin, it is the crystallization temperature of the ultra-high-molecular-weight polyethylene, the other polyethylene or the polyethylene composition, which is contained in the above composition.

The crystal dispersion temperature Tcd₂ of the second polyolefin resin is the crystal dispersion temperature of (a) the ultra-high-molecular-weight polyethylene, (b) the polyethylene other than the ultra-high-molecular-weight polyethylene, or (c) the polyethylene composition, when the second polyolefin resin is any one of them. When the second polyolefin resin is a composition comprising the polyolefin other than polyethylene or the heat-resistant resin, it is the crystal dispersion temperature of the ultra-high-molecular-weight polyethylene, the other polyethylene or the polyethylene composition, which is contained in the above composition.

The melting point Tm₂ of the second polyolefin resin is the melting point of (a) the ultra-high-molecular-weight polyethylene, (b) the polyethylene other than the ultra-high-molecular-weight polyethylene, or (c) the polyethylene composition, when the second polyolefin resin is any one of them. When the second polyolefin resin is a composition comprising the polyolefin other than polyethylene or the heat-resistant resin, it is the melting point of the ultra-high-molecular-weight polyethylene, the other polyethylene or the polyethylene composition, which is contained in the above composition.

[6] Properties of first microporous polyolefin membrane

The first microporous polyolefin membrane has the following properties.

(1) Shutdown temperature of 135°C or lower

When the shutdown temperature is higher than 135°C, a lithium battery separator formed by the microporous polyolefin membrane has low shutdown response when overheated.

(2) Air permeability change ratio of 1 x 10⁴ sec/100 cm³/°C or more

The air permeability change ratio after the start of shutdown is 1 x 10⁴ sec/100 cm³/°C or more. When the air permeability change ratio is less than 1 x 10⁴ sec/100 cm³/°C, a lithium battery separator formed by the microporous polyolefin membrane has low shutdown response when overheated.

(3) Meltdown temperature of 150°C or higher

When the meltdown temperature is lower than 150°C, the microporous membrane has poor rupture resistance during temperature elevation after shutdown.

The first microporous polyolefin membrane according to a preferred embodiment of this invention also has the following properties.

(4) Air permeability of 20 to 800 sec/100 cm³ (converted to the value at 20-µm thickness)

When the air permeability is 20 to 800 sec/100 cm³ (converted to the value at 20-µm thickness), a separator formed by microporous polyolefin membrane provides a battery with large capacity and good cycle characteristics. When the air permeability is less than 20 sec/100 cm³, shutdown does not occur sufficiently when the temperature elevates in the battery.

(5) Porosity of 25 to 80%

With the porosity of less than 25%, the microporous polyolefin membrane does not have good air permeability. When the porosity exceeds 80%, the microporous polyolefin membrane used as a battery separator does not have enough strength, resulting in a high likelihood of short-circuiting between electrodes.

(6) Pin puncture strength of 3,000 mN/20 µm or more

With the pin puncture strength of less than 3,000 mN/20 µm, a battery comprising the microporous polyolefin membrane as a separator likely suffers short-circuiting between electrodes. The pin puncture strength is preferably 3,500 mN/20 µm or more.

(7) Tensile rupture strength of 80,000 kPa or more

With the tensile rupture strength of 80,000 kPa or more in both longitudinal direction (MD) and transverse direction (TD), the microporous membrane is unlikely ruptured when used as a battery separator. The tensile rupture strength is preferably 100,000 kPa or more in both MD and TD.

(8) Tensile rupture elongation of 80% or more

With the tensile rupture elongation of 80% or more in both longitudinal direction (MD) and transverse direction (TD), the microporous membrane is unlikely ruptured when used as a battery separator.

(9) Heat shrinkage ratio of 10% or less

The heat shrinkage ratio measured after exposed at 105°C for 8 hours is 10% or less in both longitudinal direction (MD) and transverse direction (TD) after exposed to 105°C for 8 hours. When the heat shrinkage ratio exceeds 10%, a battery separator formed by the microporous polyolefin membrane shrinks by heat generated therein, making it highly likely that short-circuiting occurs in the end portions of the separator. The heat shrinkage ratio is preferably 8% or less in both MD and TD.

Thus, the first microporous polyolefin membrane has a high air permeability change ratio after the start of shutdown, a low shutdown temperature, and a high meltdown temperature, as well as excellent permeability, mechanical properties and heat shrinkage resistance.

[7] Properties of second microporous polyolefin membrane

The second microporous polyolefin membrane has the following properties.

(1) Shutdown temperature of 135°C or lower

(2) Air permeability change ratio of 1 x 10⁴ sec/100 cm³/°C or more

(3) Shutdown start temperature of 130°C or lower

When the shutdown start temperature is 130°C or lower, a lithium battery separator formed by the microporous polyolefin membrane has high shutdown response when overheated.

(4) Meltdown temperature of 155°C or higher

The second microporous polyolefin membrane according to a preferred embodiment of this invention has pin puncture strength, air permeability, porosity, tensile rupture strength, tensile rupture elongation and heat shrinkage ratio, which are in the same ranges as those of the first microporous polyolefin membrane. However, the pin puncture strength is preferably 4,000 mN or more, more preferably 4,500 mN/20 µm or more.

Thus, the second microporous polyolefin membrane has a low shutdown start temperature, a high air permeability change ratio after the start of shutdown, a low shutdown temperature, and a high meltdown temperature, as well as excellent permeability, mechanical properties and heat shrinkage resistance.

[8] Battery separator

The thickness of the battery separator formed by the first or second microporous polyolefin membrane is preferably 5 to 50 µm, more preferably 7 to 35 µm, though properly selectable depending on the types of batteries.

[9] Battery

The first and second microporous polyolefin membranes can be used preferably as separators for secondary batteries such as nickel-hydrogen batteries, nickel-cadmium batteries, nickel-zinc batteries, silver-zinc batteries, lithium secondary batteries, lithium polymer secondary batteries, etc., particularly as separators for lithium secondary batteries. Taking the lithium secondary battery for example, description will be made below.

The lithium secondary battery comprises a cathode and an anode laminated via a separator, the separator containing an electrolytic solution (electrolyte). The electrode can be of any known structure, not particularly critical. The electrode structure can be, for instance, a coin type in which disc-shaped cathode and anode are opposing, a laminate type in which planar cathode and anode are alternately laminated, a toroidal type in which ribbon-shaped cathode and anode are wound, etc.

The cathode usually comprises (a) a current collector, and (b) a cathodic active material layer capable of absorbing and discharging lithium ions, which is formed on the current collector. The cathodic active materials can be inorganic compounds such as transition metal oxides, composite oxides of lithium and transition metals (lithium composite oxides), transition metal sulfides, etc. The transition metals can be V, Mn, Fe, Co, Ni, etc. Preferred examples of the lithium composite oxides are lithium nickelate, lithium cobaltate, lithium manganate, laminar lithium composite oxides having an α-NaFeO₂ structure, etc. The anode comprises (a) a current collector, and (b) an anodic active material layer formed on the current collector. The anodic active materials can be carbonaceous materials such as natural graphite, artificial graphite, cokes, carbon black, etc.

The electrolytic solutions can be obtained by dissolving lithium salts in organic solvents. The lithium salts can be LiClO₄, LiPF₆, LiAsF₆, LiSbF₆, LiBF₄, LiCF₃SO₃, LiN(CF₃S0₂)₂, LiC(CF₃SO₂)₃, Li₂B₁₀Cl₁₀, LiN(C₂F₅SO₂)₂, LiPF₄(CF₃)₂, LiPF₃(C₂F₅)₃, lower aliphatic carboxylates of lithium, LiAlCl₄, etc. The lithium salts can be used alone or in combination. The organic solvents can be organic solvents having high boiling points and high dielectric constants, such as ethylene carbonate, propylene carbonate, ethylmethyl carbonate, γ-butyrolactone, etc.; organic solvents having low boiling points and low viscosity, such as tetrahydrofuran, 2-methyltetrahydrofuran, dimethoxyethane, dioxolane, dimethyl carbonate, diethyl carbonate, etc. These organic solvents can be used alone or in combination. Because organic solvents having high dielectric constants have high viscosity, while those having low viscosity have low dielectric constants, their mixtures are preferably used.

When the battery is assembled, the separator can be impregnated with the electrolytic solution, so that the separator (microporous polyolefin membrane) is provided with ion permeability. The impregnation treatment is usually conducted by immersing the microporous polyolefin membrane in the electrolytic solution at room temperature. When a cylindrical battery is assembled, for instance, a cathode sheet, a separator formed by the microporous polyolefin membrane, and an anode sheet are laminated in this order, and the resultant laminate is wound to a toroidal-type electrode assembly. The resulting electrode assembly can be charged into a battery can and impregnated with the above electrolytic solution. A battery lid acting as a cathode terminal equipped with a safety valve can be caulked to the battery can via a gasket to produce a battery.

This invention will be described in more detail with reference to Examples below without intention of restricting the scope of this invention.

Example 1

100 parts by mass of a polyethylene (PE) composition comprising 30% by mass of ultra-high-molecular-weight polyethylene (UHMWPE) having a mass-average molecular weight (Mw) of 2.5 x 10⁶ and 70% by mass of high-density polyethylene (HDPE) having Mw of 2.8 x 10⁵ was dry-blended with 0.375 parts by mass of tetrakis[methylene-3-(3,5-ditertiary-butyl-4-hydroxyphenyl)-propionate] methane. Measurement revealed that the PE composition comprising UHMWPE and HDPE had T (60%) of 134.3°C, ΔTₘ of 7.9°C, and ω₀ of 0.55 rad/sec (measured at 180°C).

The Mws of UHMWPE and HDPE were measured by a gel permeation chromatography (GPC) method under the flowing conditions (the same conditions applied below).
Measurement apparatus: GPC-150C available from Waters Corporation,
Column: Shodex UT806M available from Showa Denko K.K.,
Column temperature: 135°C,
Solvent (mobile phase): o-dichlorobenzene,
Solvent flow rate: 1.0 ml/minute,
Sample concentration: 0.1% by weight (dissolved at 135°C for 1 hour),
Injected amount: 500 µl,
Detector: Differential Refractometer available from Waters Corp., and
Calibration curve: Produced from a calibration curve of a single-dispersion, standard polystyrene sample using a predetermined conversion constant.

30 parts by mass of the resultant mixture was charged into a strong-blending, double-screw extruder (inner diameter = 58 mm, L/D = 42), and 70 parts by mass of liquid paraffin was supplied to the double-screw extruder via its side feeder. Melt blending was conducted at 210°C and 200 rpm to prepare a polyethylene solution.

The polyethylene solution was supplied from the double-screw extruder to a T-die, and extruded in a 1.0-mm-thick sheet shape. The extrudate was cooled by a cooling roll controlled at 50°C to form a gel-like sheet. The gel-like sheet was simultaneously biaxially stretched by a batch-type stretching machine to 5-fold in both longitudinal direction (MD) and transverse direction (TD) at 115°C. Fixed to an aluminum frame plate of 20 cm x 20 cm, the stretched gel-like sheet was immersed in a washing bath of methylene chloride controlled at 25°C, and washed while swaying at 100 rpm for 3 minutes to remove the liquid Paraffin. The washed membrane was air-dried at room temperature. Fixed to a tenter, the dried membrane was heat-set at 125°C for 10 minutes to produce a microporous polyethylene membrane.

Example 2

A microporous polyethylene membrane was produced in the same manner as in Example 1 except for using a polyethylene composition comprising 20% by mass of UHMWPE and 80% by mass of HDPE, which had T (60%) of 133.9°C, ΔTₘ of 7.1°C, and ω₀ of 0.73 rad/sec.

Example 3

A microporous polyethylene membrane was produced in the same manner as in Example 1 except for using a polyethylene composition comprising 20% by mass of UHMWPE having Mw of 2.0 x 10⁶ and 80% by mass of HDPE, which had T (60%) of 134°C, ΔTm of 7.3°C, and ω₀ of 0.82 rad/sec.

Example 4

A microporous polyethylene membrane was produced in the same manner as in Example 1 except for using a polyethylene composition comprising 20% by mass of UHMWPE and 80% by mass of HDPE having Mw of 3.0 x 10⁶, which had T (60%) of 134.4°C,ΔTₘ of 8.1 °C, and ω₀ of 0.025 rad/sec.

Comparative Example 1

A microporous polyethylene membrane was produced in the same manner as in Example 1 except for using a polyethylene composition comprising 30% by mass of UHMWPE having Mw of 2.2 x 10⁶ and 70% by mass of HDPE having Mw of 2.5 x 10⁵, which had T (60%) of 135.7°C, ΔTₘ of 12.5°C, and ω₀ of 2.4 rad/sec.

Comparative Example 2

A microporous polyethylene membrane was produced in the same manner as in Example 1 except for using only HDPE having Mw of 2.5 x 10⁵, T (60%) of 135.3°C, ΔTₘ of 10.3°C, and ω₀ of 8.6 rad/sec.

Comparative Example 3

A microporous polyethylene membrane was produced in the same manner as in Example 1 except for using a polyethylene composition comprising 30% by mass of UHMWPE having Mw of 2.2 x 10⁶, 40% by mass of HDPE having Mw of 2.5 x 10⁵, and 30% by mass of low-molecular-weight polyethylene (LMPE) having Mw of 2.0 x 10³, which had T (60%) of 133.6°C, ΔTₘ of 13.7°C, and ω₀ of 10.2 rad/sec, and changing the heat-setting temperature to 118°C.

The properties of the microporous polyethylene membranes obtained in Examples 1 to 4 and Comparative Examples 1 to 3 were measured by the following methods. The results are shown in Table 1.

(1) Average thickness (µm)

The thickness of the microporous polyethylene membrane was measured at a 5-mm interval over a width of 30 cm by a contact thickness meter, and the measured thickness was averaged.

(2) Air permeability (sec/100 cm³/20 µm)

The air permeability P₁ of the microporous membrane having a thickness T₁ was measured by an Oken-type air permeability meter (EGO-1 T available from Asahi Seiko Co., Ltd.), and converted to air permeability P₂ at a thickness of 20 µm by the formula of P₂ = (P₁ x 20)/T_{1.}

(3) Porosity (%)

It was measured by a mass method.

(4) Pin puncture strength (mN/20 µm)

The maximum load was measured when a microporous membrane having a thickness T₁ was pricked with a needle of 1 mm in diameter with a spherical end surface (radius R of curvature: 0.5 mm) at a speed of 2 mm/second. The measured maximum load L₁ was converted to the maximum load L₂ at a thickness of 20 µm by the formula of L₂ = (L₁ x 20)/T₁, which was regarded as pin puncture strength.

(5) Tensile rupture strength and elongation

Measurement was conducted on a 10-mm-wide rectangular test piece according to ASTM D882.

(6) Heat shrinkage ratio (%)

The shrinkage ratio of a microporous membrane was measured three times in both longitudinal direction (MD) and transverse direction (TD) after exposed to 105°C for 8 hours, and averaged.

(7) Shutdown temperature

The air permeability of a microporous polyethylene membrane was measured by an Oken-type air permeability meter (EGO-1T available from Asahi Seiko Co., Ltd.) while heating at a temperature-elevating speed of 5°C/minute, to find a temperature at which the air permeability reached the detection limit of 1 x 10⁵ sec/100 cm³, which was regarded as a shutdown temperature (T_{SD}).

(8) Air permeability change ratio after start of shutdown

A temperature-air permeability curve as shown in Fig. 6 was prepared from the data of air permeability p to the temperature T obtained by the above shutdown temperature measurement, to determine the gradient of the curve (Δp/ΔT, the inclination of a tangent L₃ in Fig. 6) at a temperature at which the air permeability was 1 x 10⁴ sec/100 cm³, which was regarded as an air permeability change ratio.

(9) Meltdown temperature

After reaching the above shutdown temperature, heating was continued at a temperature-elevating speed of 5°C/minute, to find a temperature at which the air permeability became 1 x 10⁵ sec/100 cm³ again, which was regarded as a meltdown temperature (T_{MD}) (see Fig.6).

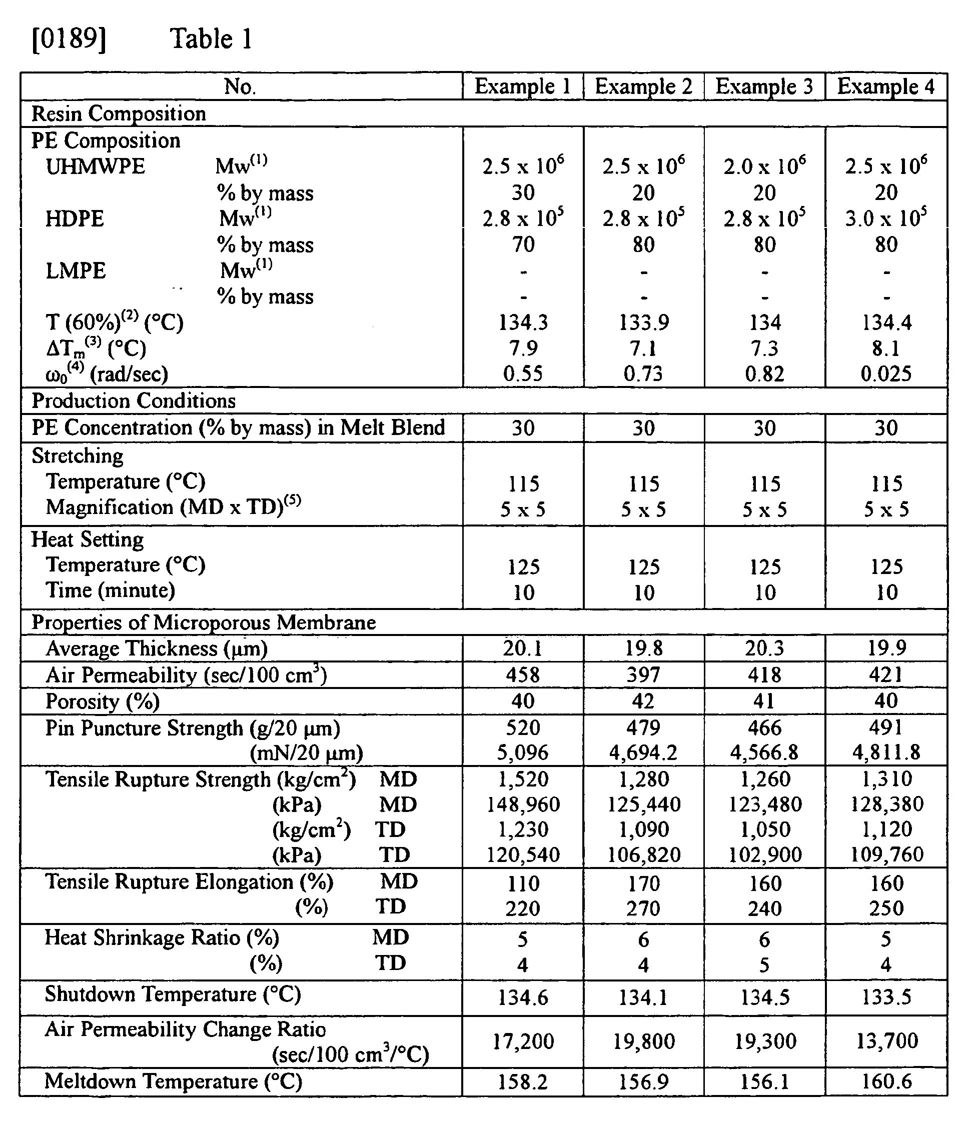

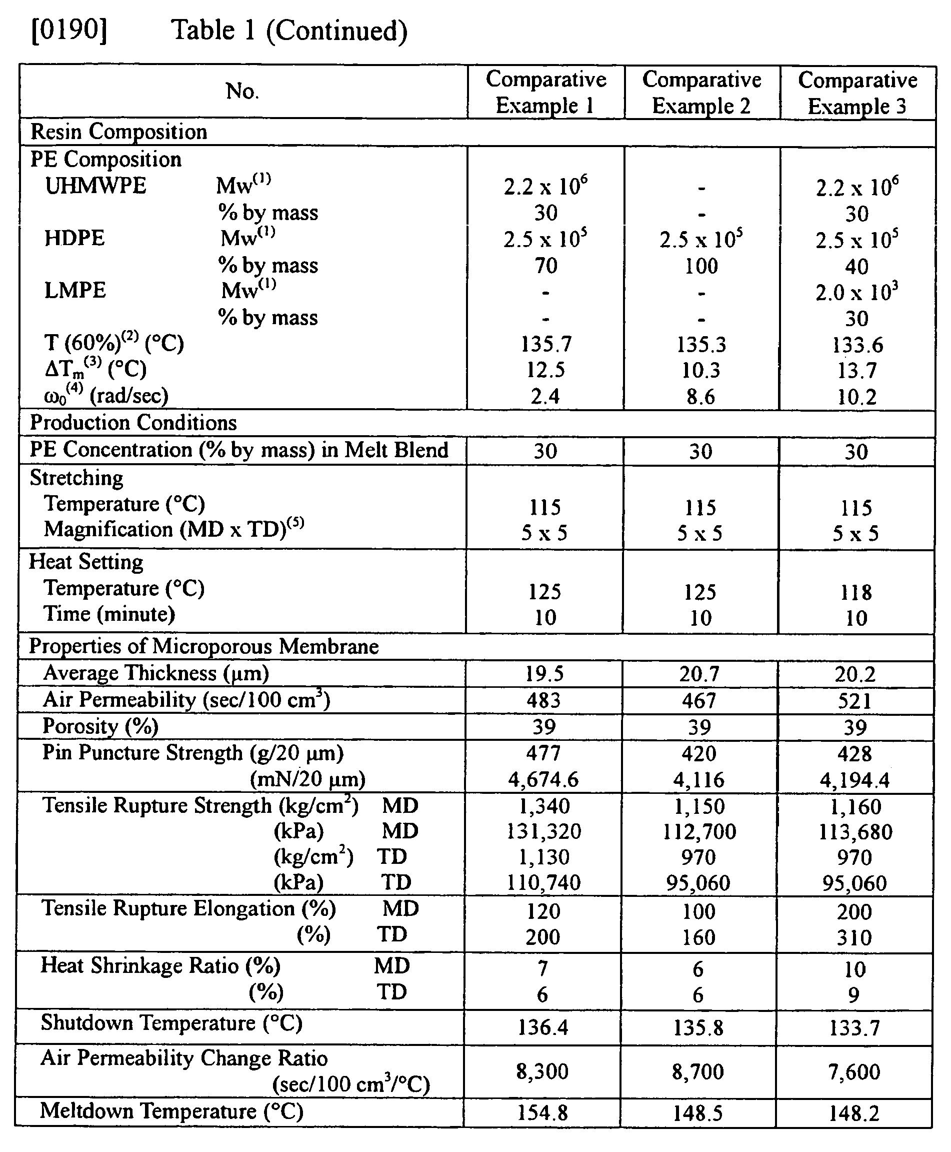

Note: (1) Mw represents a mass-average molecular weight.

(2) A temperature at which the crystal-melting calorie ΔHₘ measured by DSC at a temperature-elevating speed of 10°C/minute reached 60% of the total ΔHₘ.

(3) A half-value of a melting endotherm curve obtained by DSC at temperature-elevating speed of 10°C/minute.

(4) An angular frequency at which the storage modulus (G') and the loss modulus (G") obtained by melt viscoelasticity measurement at a temperature of 180°C were equal to each other.

(5) MD represents a longitudinal direction, and TD represents a transverse direction.

Table 1 shows that the microporous polyethylene membrane of Examples 1 to 4 had shutdown temperatures of 135°C or lower, air permeability change ratios of 10,000 sec/100 cm³/°C or more, and meltdown temperatures of 150°C or higher, exhibiting low shutdown temperatures, high shutdown speeds and high meltdown temperatures. They further had excellent permeability, mechanical strength and heat shrinkage resistance. On the other hand, the membranes of Comparative Examples 1 and 2 having T (60%) of higher than 135°C andΔTₘ of higher than 10°C had higher shutdown temperatures and poorer air permeability change ratios of less than 9,000 sec/100 cm³/°C than those of Examples 1 to 4. Having ΔTₘ of higher than 10°C and ω₀ of more than 10 rad/sec, the membrane of Comparative Example 3 had a poorer air permeability change ratio of less than 9,000 sec/100 cm³/°C and a lower meltdown temperature than those of Examples 1 to 4.

Example 5

100 parts by mass of a polyethylene composition comprising 30% by mass of UHMWPE having Mw of 2.5 x 10⁶ and 70% by mass of HDPE having Mw of 3.0 x 10⁵ was dry-blended with 0.375 parts by mass of the above antioxidant. Measurement revealed that the PE composition comprising UHMWPE and HDPE had T (20%) of 123.7°C, T (60%) of 133.2°C, and ω₀ of 0.023 rad/sec (at 180°C). A microporous polyethylene membrane was produced from the resultant mixture in the same manner as in Example 1 except for changing the simultaneous biaxial stretching temperature to 114°C.

Example 6

A microporous polyethylene membrane was produced in the same manner as in Example 5 except for using a polyethylene composition comprising 20% by mass of UHMWPE and 80% by mass of HDPE, which had T (20%) of 123.3°C, T (60%) of 132.9°C, and ω₀ of 0.025 rad/sec.

Example 7

A microporous polyethylene membrane was produced in the same manner as in Example 5 except for using a polyethylene composition comprising 30% by mass of UHMWPE having Mw of 2.0 x 10⁶ and 70% by mass of HDPE having Mw of 2.8 x 10⁶, which had T (20%) of 124.5°C, T (60%) of 134.2°C, and ω₀ of 0.69 rad/sec.

Comparative Example 4

A microporous polyethylene membrane was produced in the same manner as in Example 5 except for using a polyethylene composition comprising 30% by mass of UHMWPE having Mw of 2.2 x 10⁶ and 70% by mass of HDPE having Mw of 3.0 x 10⁵, which had T (20%) of 126.1 °C, T (60%) of 135.9°C,and ω₀ of 2.1 rad/sec.

Comparative Example 5

A microporous PE membrane was produced in the same manner as in Example 5 except for using a polyethylene composition comprising 30% by mass of UHMWPE having Mw of 2.2 x 10⁶, 40% by mass of HDPE having Mw of 3.0 x 10⁵, and 30% by mass of LMPE having Mw of 2.0 x 10³, which had T (20%) of 122°C, T (60%) of 133.6°C, and ω₀ of 10.2 rad/sec, and changing the heat-setting temperature to 117°C.

Comparative Example 6

A microporous PE membrane was produced in the same manner as in Example 5 except for using a polyethylene composition comprising 30% by mass of UHMWPE having Mw of 2.2 x 10⁶ 60% by mass of HDPE having Mw of 3.0 x 10⁵, and 10% by mass of HDPE having Mw of 2.0 x 10⁵, which had T (20%) of 124.3°C, T (60%) of 135.8°C, and ω₀ of 10.3 rad/sec.

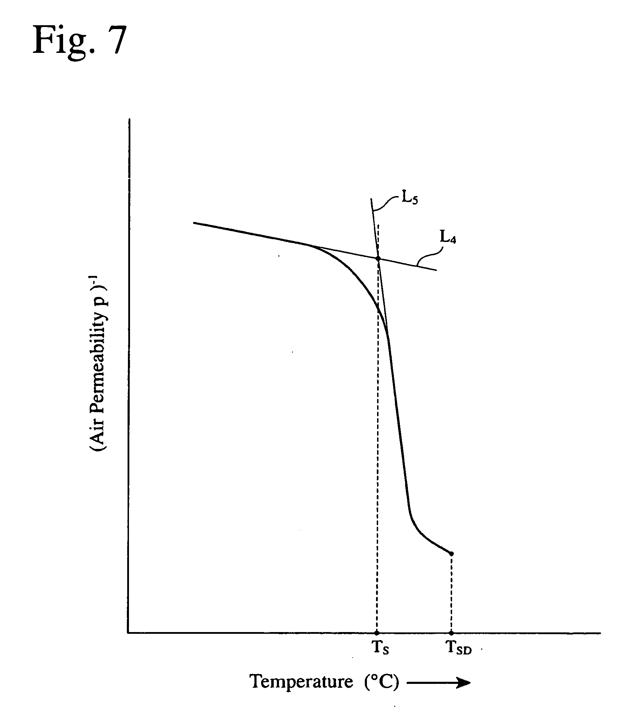

The microporous polyethylene membranes obtained in Examples 5 to 7 and Comparative Examples 4 to 6 were measured with respect to average thickness, air permeability, porosity, pin puncture strength, tensile rupture strength, tensile rupture elongation, heat shrinkage ratio, shutdown temperature, air permeability change ratio and meltdown temperature by the above methods. A curve shown in Fig. 7, which showed the relation between the temperature T and a reciprocal of the air permeability p was prepared from the data of the temperature T and the air permeability p obtained by shutdown temperature measurement. The shutdown start temperature (T_{S}) was defined as a temperature at an intersection of an extension L₄ of a straight portion of the curve after the start of temperature elevation (room temperature) and before the start of shutdown, and an extension L₅ of a straight portion of the curve after the start of shutdown and before reaching the shutdown temperature (T_{SD}). The results are shown in Table 2.

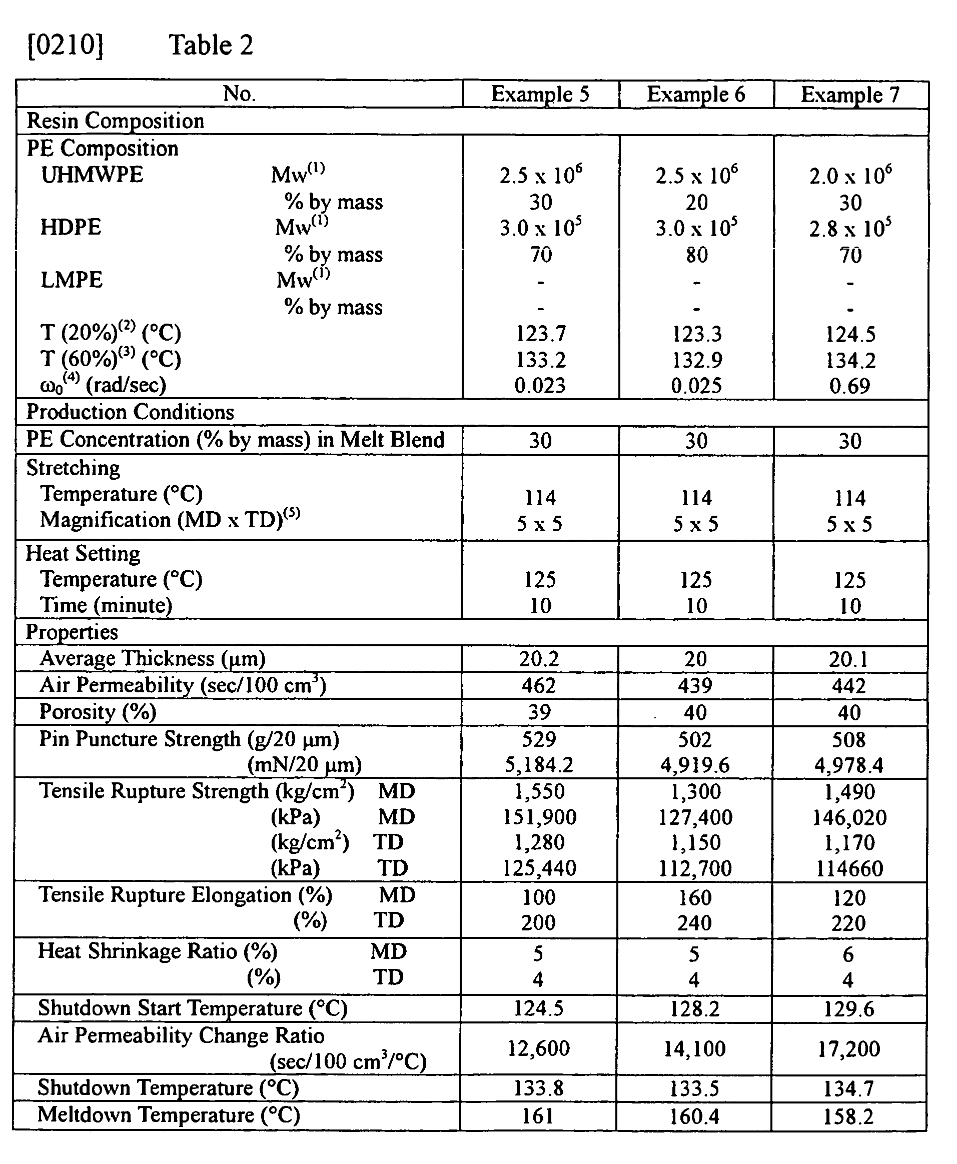

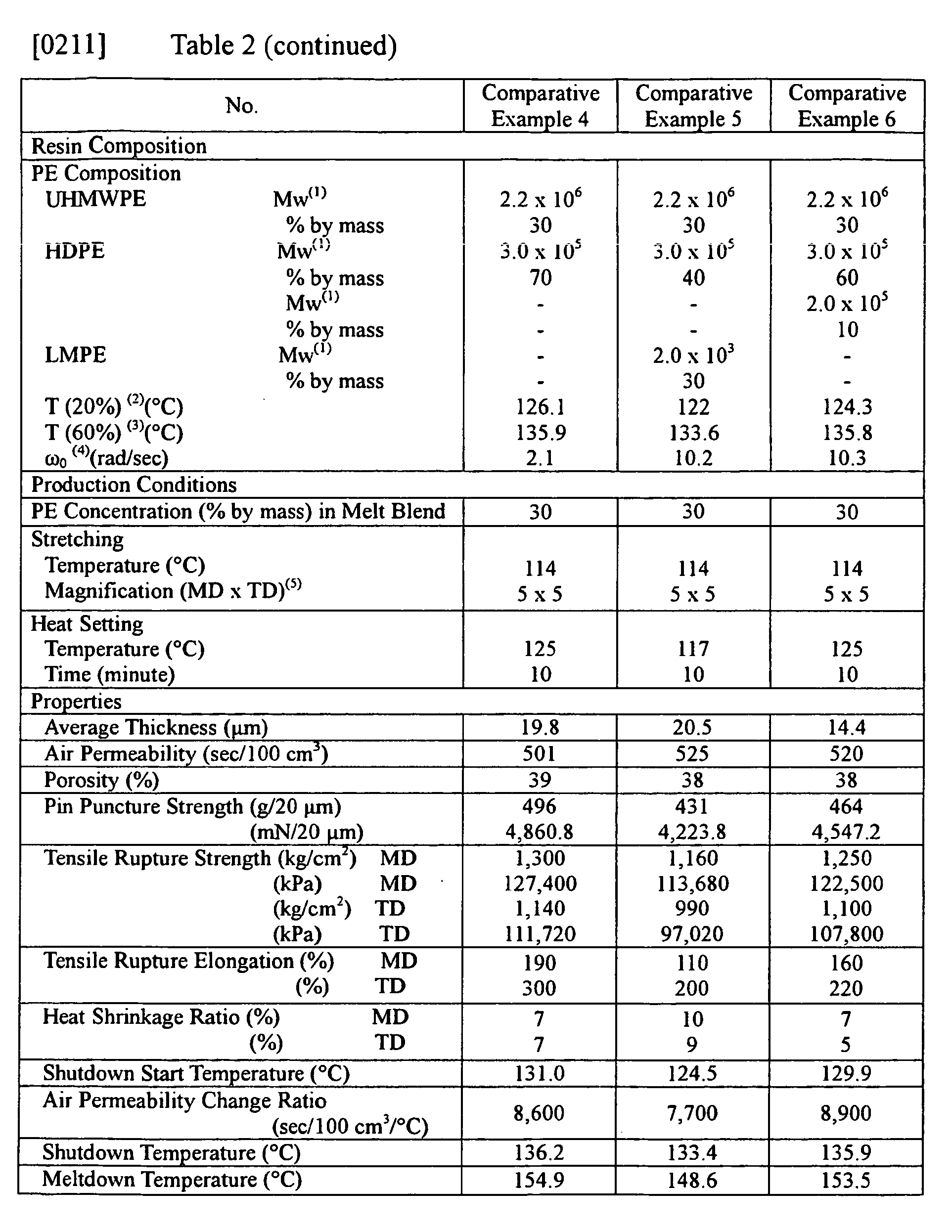

Note: (1) Mw represents a mass-average molecular weight.

(2) A temperature at which the crystal-melting calorie ΔHₘ measured by DSC at a temperature-elevating speed of 10°C/minute reached 20% of the total ΔHₘ.

(3) A temperature at which the crystal-melting calorie ΔHₘ measured by DSC at a temperature-elevating speed of 10°C/minute reached 60% of the total ΔHₘ.

(4) An angular frequency at which the storage modulus (G') and the loss modulus (G") obtained by melt viscoelasticity measurement at a temperature of 180°C were equal to each other.

(5) MD represents a longitudinal direction, and TD represents a transverse direction.

As is clear from Table 2, the microporous polyethylene membranes of Examples 5 to 7 had shutdown temperatures of 135°C or lower, air permeability change ratios of 1 x 10⁴ sec/100 cm³/°C or more, shutdown start temperatures of 130°C or lower, meltdown temperatures of 155°C or higher, exhibiting low shutdown start temperatures, high shutdown speeds, low shutdown temperatures, and high meltdown temperatures. They also had excellent permeability, mechanical strength and heat shrinkage resistance. On the other hand, the membrane of Comparative Example 4 having T (20%) of higher than 125°C and T (60%) of higher than 135°C had higher shutdown start temperature and shutdown temperature, and a poorer shutdown speed of less than 8,600 sec/100 cm³/°C than those of Examples 5 to 7. Having ω₀ of more than 1, the membranes of Comparative Examples 5 and 6 had poorer meltdown properties than those of Examples 5 to 7.

### EFFECT OF THE INVENTION

The first microporous polyolefin membrane of this invention has an excellent balance of a high air permeability change ratio after the start of shutdown, a low shutdown temperature, and meltdown properties, as well as excellent permeability, mechanical properties and heat shrinkage resistance. The second microporous polyolefin membrane of this invention has an excellent balance of low shutdown start temperature, a high air permeability change ratio after the start of shutdown, a low shutdown temperature, and meltdown properties. The use of the microporous polyolefin membrane of this invention for separators provides batteries with excellent stability, heat resistance, storage stability and productivity.

## Claims

1. A microporous polyolefin membrane made of a polyethylene resin as a main component, and having
(a) a shutdown temperature of 135°C or lower, at which the air permeability measured while heating at a temperature-elevating speed of 5°C/minute reaches 1 x 10⁵ sec/ 100 cm³,
(b) an air permeability change ratio of 1 x 10⁴ sec/100 cm³/°C or more, which is a gradient of a curve representing the dependency of air permeability on a temperature at the air permeability of 1 x 10⁴ sec/100 cm³, and
(c) a meltdown temperature of 150°C or higher, at which the air permeability measured while further heating after reaching the shutdown temperature becomes 1 x 10⁵ sec/100 cm³ again,
wherein the polyethylene resin has a temperature of 135°C or lower, at which the crystal-melting calorie measured by differential scanning calorimetry at a constant temperature-elevating speed in a range of 3 to 20°C/minute reaches 60% of the total crystal-melting calorie, a half-value of a melting endotherm curve, obtained by differential scanning calorimetry, of 10°C or lower, and an angular frequency of 10 rad/sec or less, at which the storage modulus and the loss modulus obtained by melt viscoelasticity measurement at a constant temperature in a range of 160 to 220°C are equal to each other.

2. A microporous polyolefin membrane made of a polyethylene resin as a main component, and having
(a) a shutdown temperature of 135°C or lower, at which the air permeability measured while heating at a temperature-elevating speed of 5°C/minute reaches 1 x 105 sec/100 cm³,
(b) an air permeability change ratio of 1 x 10⁴ sec/100 cm³/°C or more, which is a gradient of a curve representing the dependency of air permeability on a temperature at the air permeability of 1 x 10⁴ sec/100 cm³,
(c) a shutdown start temperature of 130°C or lower, which is determined from a curve representing the dependency of a reciprocal of the air permeability on a temperature, at an intersection of an extension of a straight portion of the curve after the start of temperature elevation and before the start of shutdown and an extension of a straight portion of the curve after the start of shutdown and before reaching the shutdown temperature, and
(d) a meltdown temperature of 155°C or higher, at which the air permeability measured while further heating after reaching the shutdown temperature becomes 1 x 10⁵ sec/100 cm³ again,
wherein (e) the air permeability, converted to the value at 20-µm thickness, is 800 sec/100 cm³ or less, (f) the pin puncture strength, converted to the value at 20 µ m thickness, is 4,000 mN or more, and (g) the heat shrinkage ratio measured after exposed to 105°C for 8 hours is 8% or less.

3. A microporous polyolefin membrane made of a polyethylene resin as a main component, and having
(a) a shutdown temperature of 135°C or lower, at which the air permeability measured while heating at a temperature-elevating speed of 5°C/minute reaches 1 x 10⁵ sec/100 cm³,
(b) an air permeability change ratio of 1 x 10⁴ sec/100 cm³/°C or more, which is a gradient of a curve representing the dependency of air permeability on a temperature at the air permeability of 1 x 10⁴ sec/100 cm³,
(c) a shutdown start temperature of 130°C or lower, which is determined from a curve representing the dependency of a reciprocal of the air permeability on a temperature, at an intersection of an extension of a straight portion of the curve after the start of temperature elevation and before the start of shutdown and an extension of a straight portion of the curve after the start of shutdown and before reaching the shutdown temperature, and
(d) a meltdown temperature of 155°C or higher, at which the air permeability measured while further heating after reaching the shutdown temperature becomes 1 x 10⁵ sec/100 cm³ again,
wherein the polyethylene resin has a temperature of 125°C or lower, at which the crystal-melting calorie measured by differential scanning calorimetry at a constant temperature-elevating speed in a range of 3 to 20°C/minute reaches 20% of the total crystal-melting calorie; a temperature of 135°C or lower, at which the crystal-melting calorie reaches 60% of the total crystal-melting calorie; and an angular frequency of 1 rad/sec or less, at which the storage modulus and the loss modulus obtained by melt viscoelasticity measurement at a constant temperature in a range of 160 to 220°C are equal to each other.

4. The microporous polyolefin membrane according to any one of the preceding claims, wherein the polyethylene resin contains a copolymer of ethylene and another α-olefin.

5. The microporous polyolefin membrane according to claim 4, wherein the copolymer is produced by the use of single-site catalysts and has a mass-average molecular weight of 1 x 10⁴ or more and less than 7 x 10⁵.

6. A battery separator formed by the microporous polyolefin membrane recited in any one of the preceding claims.

7. A battery comprising a separator formed by the microporous polyolefin membrane recited in any one of claims 1 to 5.

## Patentansprüche

1. Mikroporöse Polyolefinmembran aus einem Polyethylenharz als Hauptbestandteil und mit
(a) einer Abschalttemperatur von 135°C oder niedriger, bei der die während des Erhitzens mit einer Temperaturerhöhungsgeschwindigkeit von 5°C/min gemessene Luftdurchlässigkeit 1 x 10⁵ sec/100 cm³ erreicht,
(b) ein Luftdurchlässigkeitveränderungsverhältnis von 1 x 10⁴ sec/100 cm³/°C oder höher, das ein Gradient einer die Abhängigkeit der Luftdurchlässigkeit von einer Temperatur darstellenden Kurve bei einer Luftdurchlässigkeit von 1 x 10⁴ sec/100 cm³ ist, und
(c) einer Schmelztemperatur von 150°C oder höher, bei der die während des weiteren Erhitzens nach dem Erreichen der Abschalttemperatur gemessene Luftdurchlässigkeit wieder 1 x 10⁵ sec/100 cm³ ist,
wobei das Polyethylenharz eine Temperatur von 135°C oder niedriger aufweist, bei der die mittels Differenzialscan-Kalorimetrie bei einer konstanten Temperaturerhöhungsgeschwindigkeit in einem Bereich von 3 bis 20°C/min gemessene Kristallschmelz-Wärmemenge 60% der gesamten Kristallschmelz-Wärmemenge erreicht, einen Halbwert einer endothermen Schmelzkurve, erhalten durch Differenzialscan-Kalorimetrie, von 10°C oder niedriger sowie eine Winkelfrequenz von 10 rad/sec oder niedriger, bei der das Speichermodul und das Verlustmodul, die durch Schmelzviscoelastizitätsmessung bei einer konstanten Temperatur in einem Bereich von 160 bis 220°C gemessen werden, gleich sind.

2. Mikroporöse Polyolefinmembran aus einem Polyethylenharz als Hauptbestandteil und mit
(a) einer Abschalttemperatur von 135°C oder niedriger, bei der die während des Erhitzens mit einer Temperaturerhöhungsgeschwindigkeit von 5°C/min gemessene Luftdurchlässigkeit 1 x 10⁵ sec/100 cm³ erreicht,
(b) ein Luftdurchlässigkeitveränderungsverhältnis von 1 x 10⁴ sec/100 cm³/°C oder höher, das ein Gradient einer die Abhängigkeit der Luftdurchlässigkeit von einer Temperatur darstellenden Kurve bei einer Luftdurchlässigkeit von 1 x 10⁴ sec/100 cm³ ist,
(c) einer Abschaltbeginntemperatur von 130°C oder niedriger, die aus einer Kurve, die die Abhängigkeit eines reziproken Werts der Luftdurchlässigkeit von einer Temperatur darstellt, an einer Schnittstelle einer Verlängerung eines geraden Abschnitts der Kurve nach dem Beginn der Temperaturerhöhung und vor dem Beginn der Abschaltung und einer Verlängerung eines geraden Abschnitts der Kurve nach dem Beginn der Abschaltung und vor dem Erreichen der Abschalttemperatur bestimmt wird, und
(d) einer Schmelztemperatur von 155°C oder höher, bei der die während des weiteren Erhitzens nach dem Erreichen der Abschalttemperatur gemessene Luftdurchlässigkeit wieder 1 x 10⁵ sec/100 cm³ ist,
wobei (e) die Luftdurchlässigkeit, umgewandelt in den Wert bei 20-µm-Dicke, 800 sec/100 cm³ oder niedriger ist, (f) die Nadelstichfestigkeit, umgewandelt zu dem Wert bei 20-µm-Dicke, 4.000 mN oder höher ist und (g) das Wärmeschrumpfverhältnis, gemessen nach 8-stündigem Aussetzen unter eine Temperatur von 105 °C, 8% oder weniger beträgt.

3. Mikroporöse Polyolefinmembran aus einem Polyethylenharz als Hauptbestandteil und mit
(a) einer Abschalttemperatur von 135°C oder niedriger, bei der die während des Erhitzens mit einer Temperaturerhöhungsgeschwindigkeit von 5°C/min gemessene Luftdurchlässigkeit 1 x 10⁵ sec/100 cm³ erreicht,
(b) ein Luftdurchlässigkeitveränderungsverhältnis von 1 x 10⁴ sec/100 cm³/°C oder höher, das ein Gradient einer die Abhängigkeit der Luftdurchlässigkeit von einer Temperatur darstellenden Kurve bei einer Luftdurchlässigkeit von 1 x 10⁴ sec/100 cm³ ist,
(c) einer Abschaltbeginntemperatur von 130°C oder niedriger, die aus einer Kurve, die die Abhängigkeit eines reziproken Werts der Luftdurchlässigkeit von einer Temperatur darstellt, an einer Schnittstelle einer Verlängerung eines geraden Abschnitts der Kurve nach dem Beginn der Temperaturerhöhung und vor dem Beginn der Abschaltung und einer Verlängerung eines geraden Abschnitts der Kurve nach dem Beginn der Abschaltung und vor dem Erreichen der Abschalttemperatur bestimmt wird, und
(d) einer Schmelztemperatur von 155°C oder höher, bei der die während des weiteren Erhitzens nach dem Erreichen der Abschalttemperatur gemessene Luftdurchlässigkeit wieder 1 x 10⁵ sec/100 cm³ ist,
wobei das Polyethylenharz eine Temperatur von 125°C oder niedriger aufweist, bei der die mittels Differenzialscan-Kalorimetrie bei einer konstanten Temperaturerhöhungsgeschwindigkeit in einem Bereich von 3 bis 20 °C/min gemessene Kristallschmelz-Wärmemenge 20% der gesamten Kristallschmelz-Wärmemenge erreicht, eine Temperatur von 135°C oder niedriger, bei der die Kristallschmelz-Wärmemenge 60% der gesamten Kristallschmelz-Wärmemenge erreicht sowie eine Winkelfrequenz von 1 rad/sec oder niedriger, bei der das Speichermodul und das Verlustmodul, die durch Schmelzviscoelastizitätsmessung bei einer konstanten Temperatur in einem Bereich von 160 bis 220°C gemessen werden, gleich sind.

4. Mikroporöse Polyolefinmembran nach einem der vorhergehenden Ansprüche, wobei das Polyethylenharz ein Copolymer von Ethylen und ein anderes α-Olefin enthält.

5. Mikroporöse Polyolefinmembran nach Anspruch 4, wobei das Copolymer unter Verwendung eines Einzelplatz-Katalysators hergestellt wurde und ein massen-gemitteltes Molekulargewicht von 1 x 10⁴ oder mehr und weniger als 7 x 10⁵ aufweist.

6. Batterieseparator gebildet von der mikroporösen Polyolefinmembran nach einem der vorhergehenden Ansprüche.

7. Batterie, umfassend einen Separator, gebildet durch die mikroporöse Polyolefinmembran nach einem der Ansprüche 1 bis 5.

## Revendications

1. Membrane polyoléfine microporeuse constituée d'une résine polyéthylène en tant que composant principal, et ayant
(a) une température de coupure de 135 °C ou moins, à laquelle la perméabilité à l'air mesurée en chauffant à une vitesse d'élévation de température de 5 °C/minute atteint 1 x 10⁵ s/100 cm³,
(b) un taux de changement de perméabilité à l'air de 1 x 10⁴ s/100 cm³/°C ou plus, qui est un gradient d'une courbe représentant la dépendance de la perméabilité à l'air vis-à-vis d'une température à la perméabilité à l'air de 1 x 10⁴ s/100 cm³, et
(c) une température de fusion de 150 °C ou plus, à laquelle la perméabilité à l'air mesurée en chauffant plus avant après avoir atteint la température d'arrêt devient à nouveau 1 x 10⁵ s/100 cm³,
la résine polyéthylène ayant une température de 135°C ou moins, à laquelle la chaleur de fusion de cristal mesurée par analyse calorimétrique différentielle à une vitesse d'élévation de température constante dans une plage de 3 à 20 °C/minute atteint 60 % de la chaleur de fusion de cristal, une demi-valeur d'une courbe endotherme de fusion, obtenue par analyse calorimétrique différentielle, de 10 °C ou moins, et une fréquence angulaire de 10 rad/s ou moins, à laquelle le module de conservation et le module de pertes obtenus par mesure de viscoélasticité à chaud à une température constante dans une plage de 160 à 220 °C sont mutuellement égaux.

2. Membrane polyoléfine microporeuse constituée d'une résine polyéthylène en tant que composant principal, et ayant
(a) une température de coupure de 135 °C ou moins, à laquelle la perméabilité à l'air mesurée en chauffant à une vitesse d'élévation de température de 5 °C/minute atteint 1 x 10⁵ s/100 cm³,
(b) un taux de changement de perméabilité à l'air de 1 x 10⁴ s/100 cm³/°C ou plus, qui est un gradient d'une courbe représentant la dépendance de la perméabilité à l'air vis-à-vis d'une température à la perméabilité à l'air de 1 x 10⁴ s/100 cm³,
(c) une température de début de coupure de 130 °C ou moins, qui est déterminée à partir d'une courbe représentant la dépendance de l'inverse de la perméabilité à l'air vis-à-vis de la température, à l'intersection d'une extension d'une partie rectiligne de la courbe après le début de l'élévation de température et avant le début de la coupure et une extension d'une partie rectiligne de la courbe après le début de la coupure et avant d'atteindre la température de coupure, et
(d) une température de fusion de 155 °C ou plus, à laquelle la perméabilité à l'air mesurée en chauffant plus avant après avoir atteint la température de coupure devient à nouveau 1 x 10⁵ s/100 cm³,
(e) la perméabilité à l'air, convertie à la valeur à une épaisseur de 20 µm, étant de 800 s/100 cm³ ou moins, (f) la résistance au poinçonnement, convertie à la valeur à 20 µm d'épaisseur, étant de 4 000 mN ou plus, et (g) le taux de retrait thermique mesuré après exposition à 105 °C pendant 8 heures étant de 8 % ou moins.

3. Membrane polyoléfine microporeuse constituée d'une résine polyéthylène en tant que composant principal, et ayant
(a) une température de coupure de 135 °C ou moins, à laquelle la perméabilité à l'air mesurée en chauffant à une vitesse d'élévation de température de 5 °C/minute atteint 1 x 10⁵ s/100 cm³,
(b) un taux de changement de perméabilité à l'air de 1 x 10⁴ s/100 cm³/°C ou plus, qui est un gradient d'une courbe représentant la dépendance de la perméabilité à l'air vis-à-vis d'une température à la perméabilité à l'air de 1 x 10⁴ s/100 cm³,
(c) une température de début de coupure de 130 °C ou moins, qui est déterminée à partir d'une courbe représentant la dépendance de l'inverse de la perméabilité à l'air vis-à-vis de la température, à l'intersection d'une extension d'une partie rectiligne de la courbe après le début de l'élévation de température et avant le début de la coupure et une extension d'une partie rectiligne de la courbe après le début de la coupure et avant d'atteindre la température de coupure, et
(d) une température de fusion de 155 °C ou plus, à laquelle la perméabilité à l'air mesurée en chauffant plus avant après avoir atteint la température de coupure devient à nouveau 1 x 10⁵ s/100 cm³,
la résine polyéthylène ayant une température de 125°C ou moins, à laquelle la chaleur de fusion de cristal mesurée par analyse calorimétrique différentielle à une vitesse d'élévation de température constante dans une plage de 3 à 20 °C/minute atteint 20 % de la chaleur de fusion de cristal ; une température de 135°C ou moins, à laquelle la chaleur de fusion de cristal atteint 60 % de la chaleur de fusion de cristal ; et une fréquence angulaire de 1 rad/s ou moins, à laquelle le module de conservation et le module de pertes obtenus par mesure de viscoélasticité à chaud à une température constante dans une plage de 160 à 220 °C sont mutuellement égaux.

4. Membrane polyoléfine microporeuse selon l'une quelconque des revendications précédentes, dans laquelle la résine polyéthylène contient un copolymère d'éthylène et une autre α-oléfine.

5. Membrane polyoléfine microporeuse selon la revendication 4, dans laquelle le copolymère est produit par utilisation de catalyseurs monosites et a un poids moléculaire moyen en masse de 1 x 10⁴ ou plus et inférieur à 7 x 10⁵.

6. Séparateur de batterie formé par la membrane polyoléfine microporeuse selon l'une quelconque des revendications précédentes.

7. Batterie comprenant un séparateur formé par la largeur de membrane polyoléfine microporeuse selon l'une quelconque des revendications 1 à 5.
